Europäisches Patentamt

European Patent Office

Office européen des brevets

(11) Publication number: **0 047 583**
**A1**

(12) **EUROPEAN PATENT APPLICATION**

(21) Application number: **81303662.1**

(22) Date of filing: **12.08.81**

(51) Int. Cl.³: **F 16 D 13/68**

(30) Priority: **10.09.80 FR 8019498**

(43) Date of publication of application: **17.03.82**
**Bulletin 82/11**

(84) Designated Contracting States: **BE DE GB IT SE**

(71) Applicant: **AUTOMOTIVE PRODUCTS LIMITED,**
**Tachbrook Road, Leamington Spa Warwickshire**
**CV31 3ER (GB)**

(72) Inventor: **Nioloux, Raymond, 11 Rue Du Moutier,**
**F-93000 Saint Ouen (FR)**

(54) **Friction clutch driven plates.**

(57) This invention relates to a friction clutch driven plate having a hub (11) with an outer circumferential flange (12) and a pair of co-axial annular plates (15) and (16) mounted on the hub one to each side of the flange. The plates (15) and (16) are rotatable about the hub (11) and are held rotationally fast to each other by pins (17) that pass axially through co-operating apertures (18) and (19) in the flange (12). The relative rotation between the hub (11) and the plates is restrained by springs (21) housed in co-operating spring windows (23) in the plates and flange. At least two of said pins (17) each passes through a respective aperture (19) in the hub flange (12) that interconnects two adjacent spring windows (23).

## "Friction Clutch Driven Plates"

This invention relates to friction clutch driven plates, particularly but not exclusively, for use in automobiles.

In a typical friction clutch driven plate the friction facings are secured to a friction facing carrier capable of limited angular rotation about a hub. The hub typically has an outer circumferential flange thereon and the facing carrier comprises a pair of annular plates mounted on the hub, one to each side of the flange, and held rotationally fast to each other by pins that pass axially through co-operating apertures in the flange. The relative rotation between the hub and the carrier is restrained by torsion damping springs housed in co-operating spring windows in the annular plates and in the hub flange, and is typically limited by the pins abutting the radial ends of their respective co-operating apertures. An example of this construction is shown in British Patent 1 527 915.

A problem is presented when a large rotational movement of the carrier relative to the hub is required, for example a movement of $\pm$ 20$^{\circ}$. For such a large movement the torsion damping springs have to be sufficiently long so that the helical coils do not bind on each other during the latter stages of the limited rotation, and this necessitates large spring windows in the hub flange. Further, the apertures that accommodate the pins also necessarily have an arcuate length of $40^\circ$. Therefore, it becomes increasingly difficult to accommodate the spring windows and the pin apertures in the hub flange.

The present invention seeks to provide a construction of friction clutch driven plates in which the above problem is reduced.

Accordingly in the herein disclosed invention at least two of said pins each passes through a respective aperture in the hub flange that interconnects two adjacent spring windows therein.

The invention will be described by way of example and with reference to the accompanying drawings in which:-

Fig. 1 shows an elevation of a clutch driven plate according to this invention and having in one quadrant the friction carrier plate removed, and in another quadrant the auxiliary damper completely removed;

0047583

Fig. 2 is a section on the line II-II of Fig. 1; and

Fig. 3 is an elevation of the hub flange as is utilised in Fig. 1 and Fig. 2.

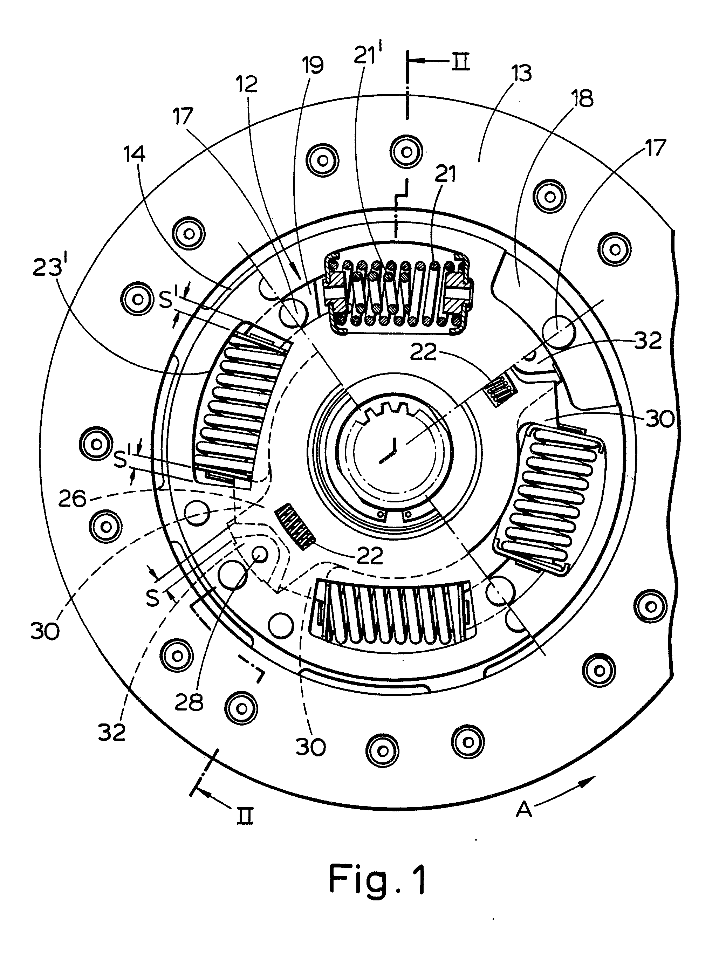

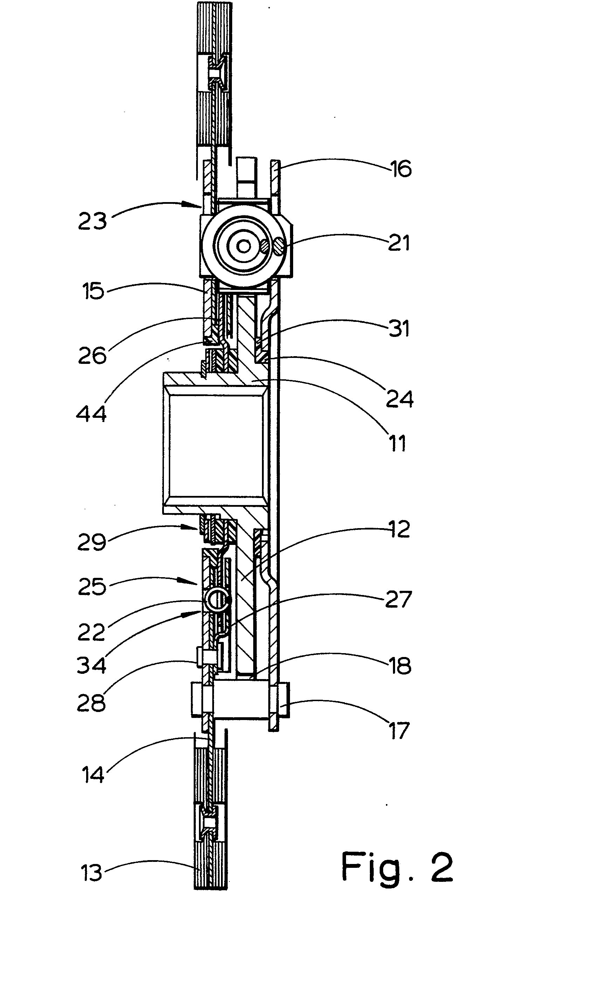

With reference to Figs. 1 to 3, the friction clutch driven plate comprises an annular hub 11 with an off-set circumferential radial flange 12 thereon. A pair of co-axial annular side plates 15 and 16 are mounted on the hub 11 one to each side of the flange 12, and are held rotationally fast to each other by four pins 17 that pass axially through co-operating apertures 18 and 19 in the flange.

The annular plate 15 is also secured to and reinforces the central area of an annular spring steel carrier plate 14 which carries at its outer margin a pair of friction facings 13 which are secured thereon. The plate 15 is located on the side of the carrier plate 14 away from the flange 12. The three plates 14, 15 and 16 form a friction facing carrier that is capable of limited rotational movement about the hub 11, this relative rotation being resisted by springs 21 and 22. The main damping springs 21 are housed in co-operating aligned spring windows 23 in the plates 14, 15 and 16 and the flange 12.

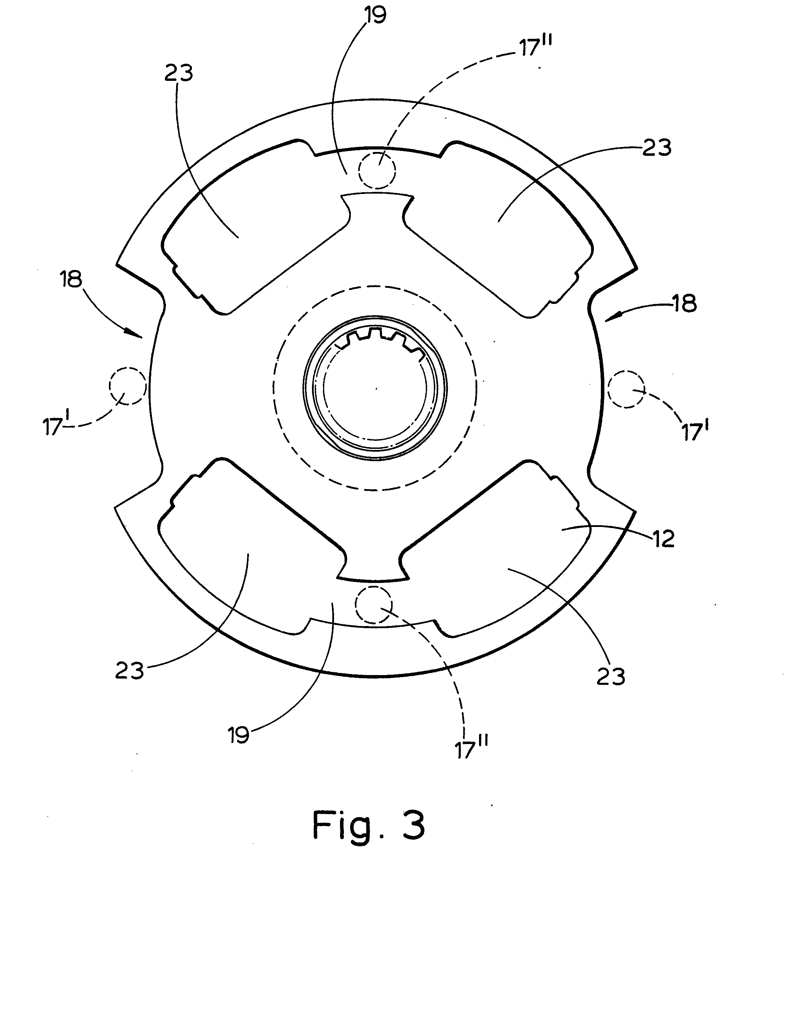

The four pins 17 are equiangularly spaced around the plates and are arranged so two diametrically opposite pins 17' are located in arcuate apertures 18 in the outer peripheral margin of the flange 12, and the two other diametrically opposite pins 17'' are located in diametrally opposite arcuate apertures 19 that each interconnected one pair of adjacent spring windows 23 (see Fig. 3).

The facing carrier formed from the plates 14, 15 and 16, is rotatable on a flanged polyamide bush 24 fitted on the hub 11 and which extends through the centre of the plate 16, the flange 31 preventing the plate 16 from rubbing directly against the hub flange 12.

Housed in the space between the carrier plate 14 and the flange 12 is an auxiliary vibration damper 25. The auxiliary damper 25 comprises a central annular plate 26 mounted on the hub 11, and two side plates, one being constituted by the plates 14 and 15 of the facing carrier, and the other being a plate 27 secured at its outer periphery by two rivets 28, to the plates 14 and 15. The central plate 26 is rotatably mounted on the hub 11 and its inner peripheral margin is gripped between a friction damper 29, and at its outer periphery there are two diametrally opposite pairs of radially projecting lugs 30. Each lug 30 of a respective pair engages with one of two functionally opposed ends of a pair of adjacent springs 23 so that the lugs 30 are utilised for positioning the springs 21 when the driven plate is in its unloaded state.

Each respective pair of lugs 30 is arranged so that one lug lies on each side of an abutment 32 formed as a depression in the plate 27 where each of the two rivets 28 pass through said plate 27. The lugs 30 have some circumferential play S/ on each side of the abutments 32 thereby allowing the central plate 26 to rotate relative to the side plate 27 and the plates 14 and 15. A pair of auxiliary vibration damper springs 22 are arranged in aligned auxiliary spring windows 34 in the plates 26, 27, 14 and 15 so as to resist the relative rotational movement between said plates 27, 14 and 15 and the central plate 26.

The main damping springs 21 are arranged to be a close fit in their respective hub windows 23 but to have some circumferential play S' at each end of their respective side plate windows 23'. The play S' is of the same angular dimensions as the play S.

Each spring 21 may also include a second concentric spring 21' located therein. The spring 21' is coiled in the opposite hand to the spring 21 so that the coils of the two springs do not interfere with each other. The spring 21' is loose within the spring 21' and is of a shorter length so that it only comes into operation during large relative rotational movements between the friction facing carrier and the hub; eg. in excess of $17^{o}$.

If the friction facings 13 are rotated anti-clockwise in the direction of arrow A, and the hub 11 held fast then the following sequence of events takes place:-

(a)   The facing carrier ie. plates 14, 15 and 16, and the vibration damper plate 27 move anti-clockwise. The springs 21, are held in position by the hub windows 23 and the side plate spring windows 23' move anti-clockwise until the play S' at the trailing end of each spring 21 has been taken up. Simultaneously the vibration damper central plate 26 is held fast by the ends of the springs 21, but its side plates 14, 15 and 27 rotate anti-clockwise, this compressing the auxiliary springs 22. This will continue until the abutment 32 contacts the leading lugs 30.

The carrier during this period rotates on the polyamide bush 24, and a second polyamide flanged bush 44 prevents the carrier plate 14 from having all but a small degree of frictional engagement with the vibration damper central plate 26.

(b)    After the circumferential plays S and S' have been taken up, then the leading edge of each spring 21 is held in position by its respective hub aperture 23 whilst the side plate spring windows 23' are moved against the trailing ends of said springs 21 to compress them. Simultaneously the abutment 32 moves the central plate 26, so causing a frictional engagement between the inner periphery of said plate 26 and the friction damper 29.

(c)    After $17^{\circ}$ of anti-clockwise movement the inner springs 21' will come into play, and the relative rotational movement will continue until the pins 17' abut the radial ends of the apertures 18. During this rotational movement the pins 17'' are each moved along their respective arcuate aperture 19 that interconnects two adjacent spring windows 23 so that before the pins 17' limit the relative rotation between the hub and carrier the pins 17'' are moved into the adjacent spring window 23 in the hub, a space in the window having been created by the anti-clockwise movement of the trailing end of the respective spring 21.

The clockwise movement of the driven plate from this position will result in the reverse sequence of movements. The springs 22 will centre the springs 21 in their respective apertures by means of the central plate 26.

Claims

1.      A friction clutch driven plate having a hub (11) with a flange (12) thereon, a pair of co-axial annular plates (15) and (16) mounted on the hub one to each side of the flange (12), said plates (15) and (16) being relatively rotatable about the hub but being held rotationally fast to each other by pins (17) that pass axially through co-operating apertures (18) and (19) in the flange (12), the relative rotation between the hub (11) and the plates (14) and (15) being restrained by springs (21) housed in co-operating spring windows (23) in the plates and hub flange, characterised in that at least two of said pins (17'') each passes through a respective aperture (19) in the hub flange (12) that interconnects two adjacent spring windows (23) therein.

2.      A friction clutch driven plate as claimed in Claim 1, characterised in that at least another two of said pins (17') are utilised to limit the relative rotation between the plates (14) and (15) and the hub (11) by abutment of the pins (17') with the radial ends of their respective co-operating apertures (18).

3.    A friction clutch driven plate as claimed in Claim 2, characterised in that the two pins (17'') that are each accommodated in an aperture (19) interconnecting two spring windows (23) are each movable into a respective adjacent spring window by rotation of the plates (15) and (16) about the hub (11), before said other two pins (17') limit the rotation.

4.    A friction clutch driven plate as claimed in any one of Claims 1 to 3, characterised in that the apertures (19) that interconnect adjacent spring windows (23) in the flange (12) are equiangularly distributed around the hub flange (12).

5.    A friction clutch driven plate as claimed in Claim 1, characterised in that an auxiliary vibration damper (25) is housed in a space between one of said co-axial annular plates (15) and the hub flange (12), said one plate (15) being utilised as a side plate for operating against vibration damper springs (22) housed in the space.

6.      A friction clutch driven plate as claimed in Claim 5, characterised in that the vibration auxiliary damper (25) has a central plate (26) capable of limited angular rotation about the hub (11) and which has two diametrically opposed pairs of lugs (30) which by abutment with abutments 32 limit rotation of the plate (26) relative to its side plates (15) and (27), and by simultaneous engagement with functionally opposed ends of a pair of adjacent springs limit rotation of the plate (26) relative to the flange (12).

7.      A friction clutch driven plate as claimed in any preceeding claim, characterised in that each spring window (23) contains a pair of concentric springs 21 and 21', the inner spring 21' being shorter in length than the outer spring 21 and being loose within the outer spring.

Fig. 1

Fig. 2

Fig. 3

| Category | Citation of document with indication, where appropriate, of relevant passages | Relevant to claim | CLASSIFICATION OF THE APPLICATION (Int. Cl.3) |
|---|---|---|---|
| | **DOCUMENTS CONSIDERED TO BE RELEVANT** | | F 16 D 13/68 |
| X | FR - A - 2 217 599 (FERODO)<br><br>* page 2, lines 19-30; page 3, lines 1-5; page 7, lines 10-13; figures 7-9 *<br>& US - A - 3 974 903<br>--- | 1,3,4 | |
| | FR - A - 2 099 137 (FICHTEL)<br><br>* page 6, lines 31-38; figure 3 *<br>& US - A - 3 762 521<br>--- | 1,2 | TECHNICAL FIELDS SEARCHED (Int. Cl.3) |
| | US - A - 2 574 573 (LIBBY)<br><br>* columns 2 and 3; especially column 2, lines 53 and 54 and lines 60-64; column 3, lines 6-19; figures 1 and 6 *<br>--- | 1,3,4 | F 16 D<br>F 16 F |
| | US - A - 4 138 003 (MALLOY)<br><br>* column 3, lines 12-40; figure 3 *<br>--- | 7 | |
| E/P/ A | GB - A - 2 052 682 (BORG WARNER) | | CATEGORY OF CITED DOCUMENTS<br><br>X: particularly relevant |
| A | FR - A - 1 423 139 (BORG WARNER)<br>& US - A - 3 223 214 | | A: technological background<br>O: non-written disclosure<br>P: intermediate document<br>T: theory or principle underlying |
| A | FR - A - 2 169 691 (DAIKIN SEI-SAKUSHO K.K.) | | the invention<br>E: conflicting application<br>D: document cited in the |
| A | DE - A - 2 446 976 (LUK) | | application<br>L: citation for other reasons |
| D | GB - A - 1 527 915 (AUTOMOTIVE)<br>---------- | | &: member of the same patent family,<br>corresponding document |

The present search report has been drawn up for all claims

| Place of search | Date of completion of the search | Examiner |
|---|---|---|
| The Hague | 01.12.1981 | ORTHLIEB |

EPO Form 1503.1   06.78